(19) **Europäisches Patentamt / European Patent Office / Office européen des brevets**

(11) **EP 2 717 425 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(51) Int Cl.:
*H02J 9/02* (2006.01)   *H02J 9/06* (2006.01)
*H05B 33/08* (2006.01)

(21) Anmeldenummer: **13198488.2**

(22) Anmeldetag: **19.01.2007**

(54) **LED-Treiberschaltung**

LED driver

Circuit de commande de DEL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2006 DE 102006018531**
**03.07.2006 DE 102006030655**

(43) Veröffentlichungstag der Anmeldung:
**09.04.2014 Patentblatt 2014/15**

(62) Dokumentnummer(n) der früheren Anmeldung(en) nach Art. 76 EPÜ:
**11154704.8 / 2 323 240**
**10169401.6 / 2 234 240**
**07702900.7 / 2 011 213**

(73) Patentinhaber: **Tridonic GmbH & Co. KG**
**6851 Dornbirn (AT)**

(72) Erfinder:
• **Stevens, Frederick**
**Spennymoor, Durham, DL16 7LE (GB)**
• **Wallhead, Geoff**
**Newton Aycliffe, Durham, DL5 5HL (GB)**
• **Rohner, Daniel**
**1220 Wien (AT)**

• **Mair, Alexander**
**1220 Wien (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**EP-A- 1 507 327    JP-A- 2000 235 055**
**US-B1- 6 502 044    US-B2- 6 858 994**

• **RICO-SECADES M ET AL: "Evaluation of a low cost permanent emergency lighting system based on high efficiency LEDs", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 1, 12. Oktober 2003 (2003-10-12), Seiten 542-546, XP010676072, DOI: 10.1109/IAS. 2003.1257553 ISBN: 978-0-7803-7883-4**

EP 2 717 425 B1

**Beschreibung**

Die vorliegende Erfindung bezieht sich auf Schaltungen zum Betrieb von Leuchtdioden.

Auch wenn in der vorliegenden Beschreibung die Erfindung bezugnehmend auf Notlichtgeräte mit LEDs beschrieben werden wird, so ist zu verstehen, dass sich die Erfindung ganz allgemein auf LED-Betriebsschaltungen bezieht.

Notlichtgeräte weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Aus dem Stand der Technik ist bekannt das Dokument EP 1 507 327 A und das Dokument "Evaluation of a low cost permanent emergency lighting system based on high efficiency LEDs" von Rico-Secades M., et al. Conference record of the 2003 IEEE Industry Applications Conference, 38TH. IAS Annual meeting. Salt Lake City, UT, OCT. 12-16, 2003; (Conference Record of the IEEE Industry Applications Conference. IAS annual Meeting), New York, NY: IEEE, US Bd. 1, 12. Oktober 2003, Seiten 542-546. Weiter ist bekannt das Dokument US 6,858,994 B2, das Dokument US 6 502 044B1 und das Dokument JP 2000 235055 A.

Der vorliegenden Erfindung liegt nunmehr die Aufgabe zugrunde, eine Schaltung zum Betrieb von LEDs vorzuschlagen.

Diese Aufgabe wird durch die Merkmale der unabhängigen Ansprüche gelöst. Vorteilhafte Weiterbildungen der Erfindung sind Gegenstand der Unteransprüche.

Die Erfindung schlägt vor eine Schaltung zum Betreiben wenigstens einer LED nach Anspruch 1.

Die Steuereinheit kann die Schaltfrequenz und/oder das Tastverhältnis abhängig wenigstens von dem erfassten zeitlichen Mittelwert des Stroms durch die LED einstellen.

Zum Dimmen der LED kann die Steuereinheit der hochfrequenten Taktung des Schalters eine im Vergleich dazu niederfrequente Modulation überlagern und/oder die hochfrequente Taktung verändern.

Die niederfrequente Modulation kann eine PWM-Modulation sein.

Die Treiberschaltung kann ausgehend von einer Batterie, ggf. assistiert von einer Netzspannung versorgt sein oder rein durch Netzspannung versorgt sein.

Es kann vorgesehen sein eine Batterieentladestrom-Erfassungseinheit, die mit der Steuereinheit funktionell verbinden ist, wobei zur Regelung des Batterieentladestroms der Strom durch die LED abhängig von dem erfassten Batterieentladestrom einstellbar ist.

Die Batterie kann mit einer mit Netzspannung versorgte Ladeschaltung verbunden sein.

Die Treiberschaltung kann die LED dimmen, wenn der Mittelwert der Netzspannung unter einen Schwellenwert absinkt.

Die Ladeschaltung kann einen Flyback-Konverter aufweisen.

Der Flyback-Konverter kann gepulst angesteuert sein, wenn der Mittelwert der Netzspannung unter einen Schwellenwert absinkt.

Es kann eine Batteriespannung-Erfassungsschaltung vorgesehen sein.

Der Strom durch die LED kann abhängig von einem Ausgangssignal der Batteriespannung-Erfassungsschaltung einstellbar sein.

Der Batterieladestrom kann erfasst und ggf. geregelt werden.

Die Steuereinheit kann die LED-Spannung erfassen.

Die Steuereinheit kann bei Inbetriebnahme eine Testmessung elektrischer Parameter ausführen, um herauszufinden, ob eine bzw. welche LED an die Treiberschaltung angeschlossen ist.

Die Steuereinheit kann den Betriebsstrom durch die LED abhängig von dem Ergebnis der Testmessung einstellen.

Die Testmessung kann in dem Anlegen einer verhältnismässig kleinen Spannung durch entsprechende Ansteuerung der Treiberschaltung und dem Messen des sich ergebenden LED-Stroms bestehen.

Die Steuereinheit kann bei Inbetriebnahme die LED-Spannung, durch entsprechende Ansteuerung des Schalters der Treiberschaltung, von einem niedrigen Wert aus zu einem stationären Betriebswert erhöhen.

Beispielsweise wird eine Schaltung zum Betreiben wenigstens einer LED vorgeschlagen, aufweisend:

- eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal zu einer Steuereinheit liefert, weiterhin aufweisend eine Batterieentladestrom-Erfassungseinheit, die mit der Steuereinheit funktionell verbinden ist, wobei zur Regelung des Batterieentladestroms der Strom durch die LED abhängig von dem erfassten Batterieentladestrom durch Einstellung des Schaltverhaltens des Schalters der Treiberschaltung einstellbar ist.

Es wird z.B. auch eine Schaltung zum Betreiben wenigstens einer LED vorgeschlagen, aufweisend:

-     eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungs-Strompfad bei geöffnetem Schalter ein Stromerfassungsmittel vorgesehen ist, weiterhin aufweisend eine Batteriespannung-Erfassungsschaltung, wobei der der Strom durch die LED abhängig von einem Ausgangssignal der Batteriespannung-Erfassungsschaltung durch Einstellung des Schaltverhaltens des Schalters der Treiberschaltung einstellbar ist.

Eine weiterer beispielshafter Aspekt bezieht sich auf eine Schaltung zum Betreiben wenigstens einer LED, aufweisend:

-     eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal zu einer Steuereinheit liefert, bei der die Steuereinheit bei Inbetriebnahme eine Testmessung elektrischer Parameter ausführt, um herauszufinden, ob eine bzw. welche LED an die Treiberschaltung angeschlossen ist.

Ein Beispiel betrifft weiterhin eine Schaltung zum Betreiben wenigstens einer LED, aufweisend:

-     eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert,

wobei in dem Entmagnetisierungsstrompfad bei geöffnetem Schalter ein Stromerfassungsmittel vorgesehen ist, das ein Strom-Erfassungssignal zu einer Steuereinheit liefert, bei der die Steuereinheit bei Inbetriebnahme die LED-Spannung, durch entsprechende Ansteuerung des Schalters der Treiberschaltung, von einem niedrigen Wert aus zu einem stationären Betriebswert erhöht.

Ein Notlichtgerät nach Anspruch 10 kann eine Schaltung der oben angeführten Art aufweisen.
Ein Beispiel schlägt auch vor ein Verfahren zur Ermittlung des Stroms durch eine LED, die durch eine Schaltung betrieben wird, die aufweist:

-     eine Spule und einen mit der Spule in Serie geschalteten Schalter,
      wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal liefert, wobei der zeitlich gemittelten Wert des Stroms durch die LED anhand des Werts des Erfassungssignals am Ende des Einschaltzyklus sowie des Werts am Ende der Entmagnetisierungsphase ermittelt wird.

Ein weiteres Beispiel zum Betreiben einer LED mit einer Schaltung wird vorgeschlagen, wobei die Schaltung aufweist:

-     eine Spule und einen mit der Spule in Serie geschalteten Schalter,
      wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal liefert, wobei die LED ausgehend von einer Batterie betrieben wird, wobei der Batterieentladestrom erfasst wird und zur Regelung des Batterieentladestroms der Strom durch die LED abhängig von dem erfassten Batterieentladestrom durch Einstellung des Schaltverhaltens des Schalters der Treiberschaltung eingestellt wird.

Ein weitere Aspekt der Erfindung bezieht sich auf ein Verfahren zum Betreiben einer LED mit einer Schaltung, die aufweist:

-     eine Spule und einen mit der Spule in Serie geschalteten Schalter,
      wobei bei geschlossenem Schalter die Spule aufmagnetisiert wird und bei geöffneten Schalter die Spule in Form eines Stroms durch die LED entmagnetisiert,

wobei in dem Entmagnetisierungsstrompfad bei geöffnetem Schalter ein Stromerfassungsmittel vorgesehen ist, das ein Strom-Erfassungssignal liefert,
wobei die LED ausgehend von einer Batterie betrieben wird,
wobei die Batteriespannung erfasst wird und der Strom durch die LED abhängig von einem Ausgangssignal der Batteriespannung-Erfassungsschaltung durch Einstellung des Schaltverhaltens des Schalters der Treiberschaltung eingestellt wird.

Ein noch weiteres Beispiel bezieht sich auf ein Verfahren zum Betreiben einer LED mit einer Schaltung, die aufweist:

- eine Spule und einen mit der Spule in Serie geschalteten Schalter,
- wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal liefert, wobei bei Inbetriebnahme der Schaltung die LED-Spannung, durch entsprechende Ansteuerung des Schalters der Treiberschaltung, von einem niedrigen Wert aus zu einem stationären Betriebswert erhöht wird.

Nachfolgend soll die Erfindung anhand der beiliegenden Zeichnung näher erläutert werden. Es zeigen:

Fig. 1 schematisch das Schaltbild eines ersten Ausführungsbeispiels eines erfindungsgemäßen Notlichtgeräts;

Fig. 2 ein zweites Ausführungsbeispiel eines Notlichtgeräts;

Fig. 3 eine Grafik zur Ermittlung der Netzversorgungsspannung auf Basis von an der Ausgangsseite der Ladeschaltung gemessenen Betriebsparametern,

Fig. 4 eine weitere Grafik zur Ermittlung der Sekundärleistung der Ladeschaltung, welche zur indirekten Bestimmung der Lichtquellenleistung berücksichtigt wird,

Fig. 5 eine Illustration einer Batterieschaltung,

Fig. 6 eine LED-Treiberschaltung, und

Fig. 7 die Ansteuerung des Treiberschalters sowie den sich ergebenden Diodenstrom.

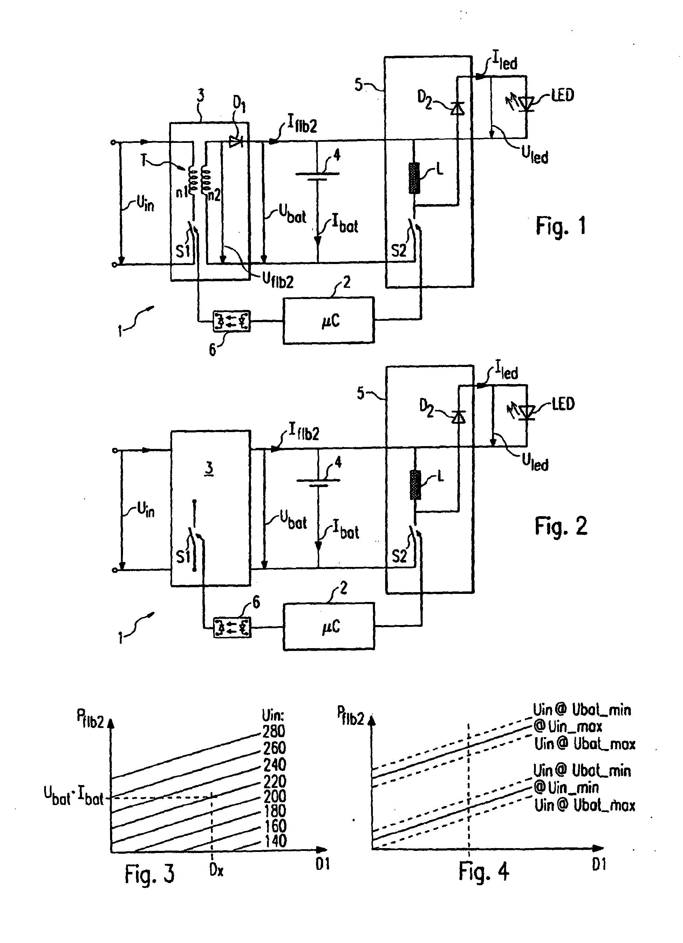

Das in Fig. 1 in vereinfachter Weise dargestellte und allgemein mit dem Bezugszeichen 1 versehene erfindungsgemäße Notlichtgerät ist im dargestellten Ausführungsbeispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf.

Die Ladeschaltung 3 ist im dargestellten ersten Ausführungsbeispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1}/(T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Duty-cycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Dabei kann auf eine direkte Messung der Netzversorgungsspannung $U_{in}$ verzichtet werden. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem ersten Ausführungsbeispiel gemäß Fig. 1 wird hierzu die auf der Sekundärseite des Sperrwandlers bzw. Flyback-Konverters 3 anliegende Spannung $U_{flb2}$ gemessen, wozu insbesondere keine galvanische Trennung erforderlich ist, da diese Größe auf dem gleichen Bezugspotential liegt, wie die Steuereinheit 2, welchen den Messwert auswertet. Ist nun die Höhe dieser Sekundärspannung $U_{flb2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{flb2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{flb2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{flb2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{flb2}$ und Batteriespannung $U_{Bat}$, so dass sich die Tätigkeit der Treiberschaltung 3 nicht auf den vorbeschriebenen Vorgang der Bestimmung der Eingangsspannung $U_{in}$ auswirkt.

Ein zweites, etwas allgemeineres Ausführungsbeispiel eines erfindungsgemäßen Notlichtgeräts ist in Fig. 2 dargestellt. Dieses entspricht in seinem Aufbau im Wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Ausführungsform besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{flb2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{flb2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{flb2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Ausführungsbeispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen.

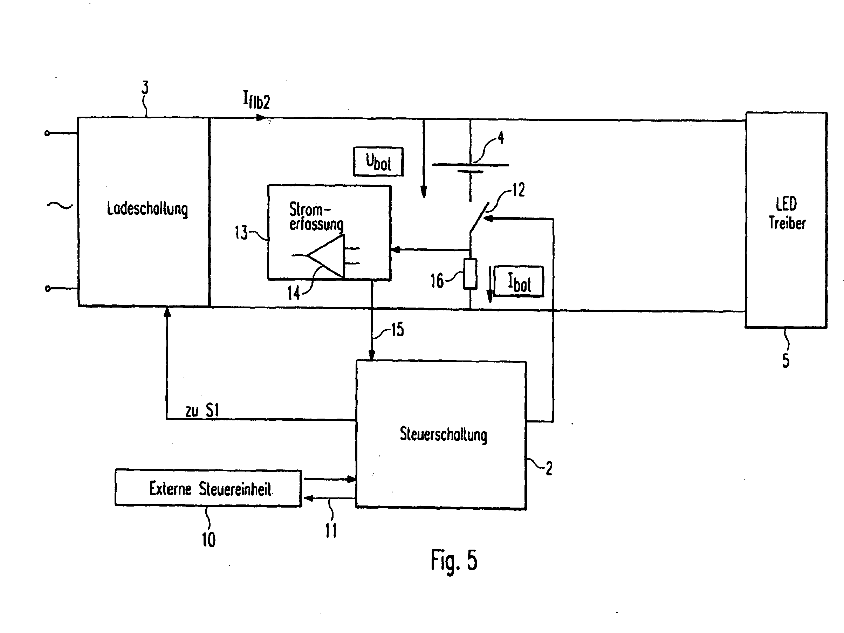

Bezug nehmend auf Figur 5 sollen nunmehr Einzelheiten der Verschaltung der Batterie 4 erläutert werden.

Wie in Figur 5 ersichtlich, ist seriell zu der Batterie 4 ein Element 12 verschaltet, dass die Funktion eines Linearreglers und/oder eines Schalters aufweisen kann. Beispielsweise kann dieses Element 12 ein Transistor sein. Seriell zu der Batterie 4 ist weiterhin ein Messwiderstand (Shunt) 16 geschaltet, so dass der Spannungsabfall an dem Shunt 16 repräsentativ für den Batteriestrom ist.

Das an dem Shunt 16 abgegriffene Messsignal wird einer Stromerfassungseinheit 13 zugeführt, die vorzugsweise als diskrete Schaltung aufgebaut ist und einen Komparator 14 aufweisen kann. Der Komparator 14 ist nur ein Beispiel dafür, wie ein Offset auf das Messsignal vom Shunt 16 beaufschlagt werden kann. Die Beaufschlagung des Offsets dient dazu, in vereinfachter Weise den Batteriestrom wiedergebende Signale mit unterschiedlichen Polaritäten auswerten zu können, in dem der Offset so gewählt ist, dass die Signalpegel so verschoben werden, dass beide Signalpolaritäten nunmehr die gleiche Polarität und dafür unterschiedliche Amplituden aufweisen. Somit lässt sich in verhältnismäßig einfacher Weise beispielsweise durch die Steuerschaltung 2 sowohl der Batterieladestrom wie auch der Batterieentladestrom messen, die bekanntlich unterschiedliche Polaritäten haben. Der Steuerschaltung 2 wird also somit bevorzugt ein Messsignal 15 mit einheitlicher Polarität zugeführt.

Wenn der Transistor 12 als Linearregler ausgebildet ist, kann mittels der Stromerfassungseinheit 13 und Ansteuerung des Linearreglers 12 eine Regelung des Batterieentladestroms und/oder Batterieladestroms auf einen vorgegebenen Sollwert ausgeführt werden. In vereinfachter Weise kann diese Regelung natürlich auch als Schutzschaltung ausgeführt werden, so dass bei einem allzu hohen Batterieladestrom oder Batterieentladestrom der Schalter 12 geöffnet wird, um die Batterie 4 zu schonen.

Bei sehr langem Ausfall der Netzspannung kann eine Tiefentladung der Batterie 4 auftreten. Wenn die Batterie 4 tiefentladen ist, weist sie eine Spannung von beispielsweise 1,3 Volt auf, die also unter der zulässigen Spannung von beispielsweise 1,5 Volt liegt. Selbst wenn nunmehr eine ordnungsgemäße Netzspannung eingangsseitig an der Ladeschaltung 3 anliegt, und die Ladeschaltung 3 in der oben beschriebenen Weise ordnungsgemäß betrieben wird, wird die tiefentladene Batterie 4 die Sekundärseite der Ladeschaltung auf den einen unzulässig niedrigen Wert ziehen.

Diese Tiefentladung kann mittels Erfassung der Spannung der Batterie 4 erfasst werden. Bei Erfassung einer derartigen Tiefentladung wird der Schalter 12 vorzugsweise getaktet betrieben. Dabei wird vorzugsweise der Schalter 12 nur für eine verhältnismäßig kurzen Zeitraum geschlossen, wobei in diesem kurzen Zeitraum ein Ladevorgang der Batterie 4 erfolgt. Danach wird indessen der Schalter 12 wieder auf einen längeren Zeitraum geöffnet, so dass die Batterie 4 von der Sekundärseite der Ladeschaltung 3 abgetrennt ist und die Ladeschaltung 3 sekundärseitig wieder die ordnungsgemäße Spannung von beispielsweise 1,5 Volt bereitstellen kann. Somit liegt sekundärseitig während eines weit größeren Zeitraums ein ordnungsgemäßes Spannungsverhältnis vor.

Es liegt somit eine impulsförmige Ladung der tiefentladenen Batterie vor.

Während der Schalter 12 geöffnet ist, versorgt die eine wieder anliegende Netzspannung mittels der Ladeschaltung korrekt die angeschlossene LED-Treiberschaltung und LEDs. Bei kurzzeitig geschlossenem Schalter dagegen wird die Batterie schonend wieder aufgeladen. Beispielsweise kann das Tastverhältnis für den Schalter 12 derart gewählt sein, dass er nur während 10% der Gesamtzeitdauer geschlossen ist und entsprechend 90% geöffnet, so dass sich die Batterie in diesen 90% Zeitdauer erholen kann.

Bei erfasster Tiefentladung der Batterie mittels der Erfassung der Batteriespannung kann automatisch in diesem gepulsten Betrieb des Schalters 12 umgeschaltet werden. Vorzugsweise erfolgt die Überwachung der Batteriespannung über eine diskrete Schaltung und somit unabhängig vom Mikrocontroller 2 (siehe Figuren 1, 2), der ja womöglich bei zu niedriger Batteriespannung nicht voll funktionsfähig ist.

Im übrigen ist aus diesem Grund auch bevorzugt die Stromerfassungsschaltung 13 mit dem Komparator 14 als diskrete Schaltung und somit unabhängig vom Mikrocontroller 2 und dessen ordnungsgemäßem Betrieb gewählt.

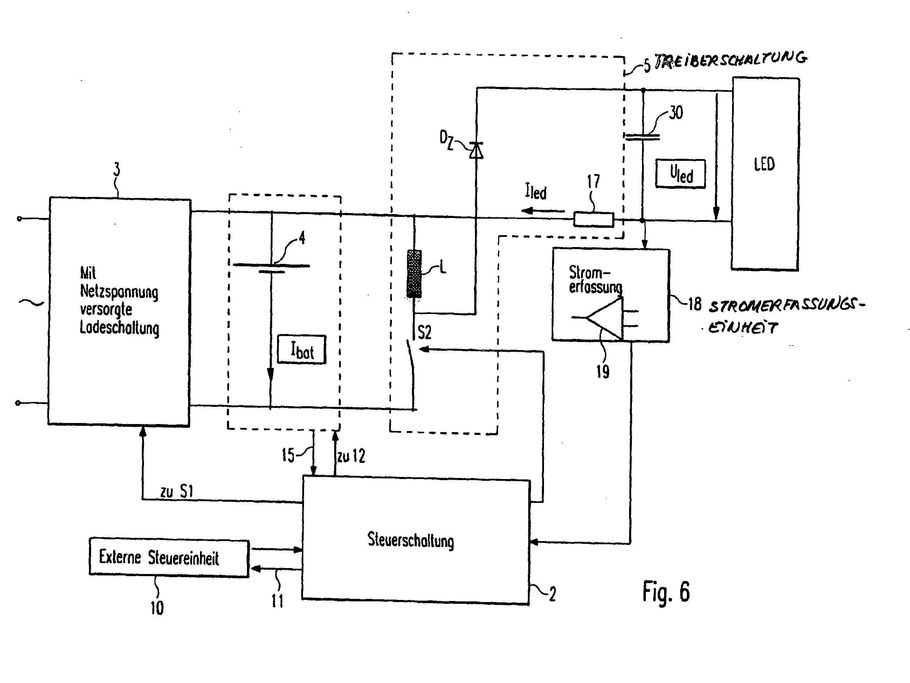

Figur 6 zeigt weitere Einzelheiten zur einer LED-Treiberschaltung 5. Sämtliche Merkmale der Batterieschaltung von Figur 5 lassen sich im übrigen (wahlweise) mit der Schaltung von Figur 6 kombinieren.

Das Grundprinzip der Treiberschaltung 5 ist, wie bereits eingangs beschrieben, ein Schaltregler, bei dem bei geschlossenem Schalter S2 die Spule L aufmagnetisiert wird und sich die magnetische Energie bei wiedergeöffnetem Schalter S2 über einen Strompfad entlädt, der in Serie eine Zenerdiode, wenigstens eine LED sowie einen Ohmschen Widerstand 17 aufweist.

Bekanntlich ist es verhältnismäßig einfach, den Stromfluß durch die Dioden bei geschlossenem Schalter S2 zu messen.

Dagegen ist es etwas komplexer, den Stromfluß durch die LEDs bei geöffnetem Schalter S2 zu messen.

Zur Stromerfassung ist der Widerstand 17 in Serie zu den LEDs geschaltet, wobei dieser Widerstand 17 ein Beispiel für ein Stromerfassungsmittel darstellt.

Eine Stromerfassungseinheit 18 kann beispielsweise einen Komparator 19 aufweisen.

Ein Stromerfassungssignal, d.h. ein den Strom durch die LEDs wiedergebendes Signal wird der Steuerschaltung 2 zugeführt. Die Steuerschaltung 2 kann das Schaltverhalten des Schalters S2 u.a. abhängig von dem Stromerfassungssignal ausgestalten.

Ein Kondensator 30 ist parallel zu der wenigstens einen LED geschaltet. Der Kondensator 30 glättet den LED-Strom, indem er Energie speichert und die Spannung über der wenigstens einen LED im wesentlichen konstant hält. Der Kondensator 30 ist dabei derart bemessen, dass weiterhin die Regelung der LED-Spannung möglich ist.

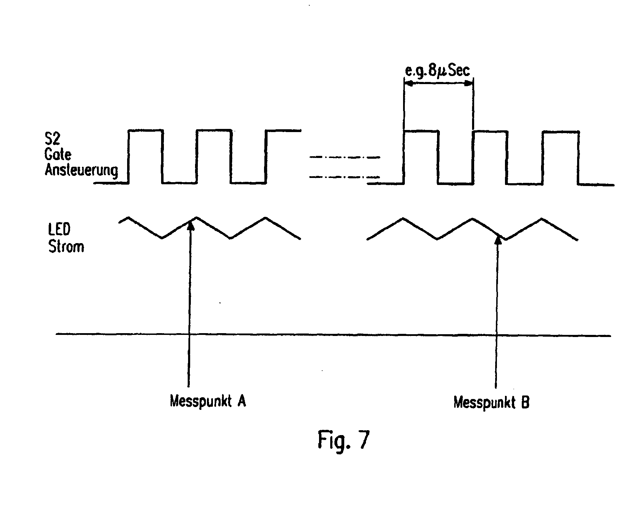

Figur 7 zeigt schematisch die Ansteuerung des Schalters S2, d.h. für den Fall, dass dieser Schalter als FET-Transistor ausgebildet ist, die Ansteuerung des Gate dieses Transistors in der Zusammenschau mit dem sich einstellenden Strom durch die LEDs. Während der Einschaltzeitdauer des Schalters fällt der Strom durch die LEDs jeweils ab. Während der Ausschaltzeitdauer steigt er, getrieben durch die magnetische Energie der Spule L wieder an. Somit ergibt sich ein um einen festen DC-Wert zickzackförmiger Verlauf des Stroms durch die LED. Die Stromerfassung soll nunmehr insbesondere den zeitlichen Mittelwert dieses Stroms ermitteln können, um somit beispielsweise die Leistung der LEDs entweder auf einen konstanten Wert oder auf einen frei wählbaren Wert (Dimming) wählen zu können.

Es ist vorgesehen, dass die Steuerschaltung 2, die das Schaltverhalten des Schalters S2 vorgibt und somit kennt, den Stromwert zu einem ersten Meßpunkt A sowie zu einem zweiten Meßpunkt B ermittelt, um daraus wiederum den Mittelwert zu bilden. Aus dem Mittelwert des Stromwerts zum Meßzeitpunkt A und Meßzeitpunkt B ergibt sich dann der zeitliche Mittelwert des LED-Stroms.

Der Meßpunkt A ist dabei so gewählt, dass er im Bereich des Endes des Ausschaltens des Schalters S2 liegt, während der Zeitpunkt B derart gewählt ist, dass er am Ende der Einschaltzeitdauer liegt.

Vorzugsweise wird für einen Messzyklus eine Messung mehrerer Minimal- und Maximalwerte ausgeführt. Somit lassen sich Ungenauigkeiten bezüglich des Messzeitpunkts herausmitteln. Für dieses Messprinzip sind die Messzeitpunkte mit der Taktung des Schalters S2 synchronisiert. Indessen kann es bei dieser Synchronisierung zu Ungenauigkeiten kommen, die bspw. durch die Verzögerungen von A/D-Wandlern begründet werden. Diese Ungenauigkeiten werden durch die Erfassung mehrere Werte herausgemittelt.

Somit lässt sich also der zeitliche Mittelwert des Stroms durch die LED erfassen, und die Steuereinheit 2 kann abhängig davon die Schaltfrequenz und/oder das Tastverhältnis des Schalters S2 einstellen. Zum Dimmen der LED kann die Steuereinheit 2 beispielsweise der hochfrequenten Taktung des Schalters S2 eine im Vergleich dazu niederfrequente Modulation beispielsweise in Form einer PWM-Modulation überlagern. Dies stellt eine alternative oder zusätzliche Möglichkeit zur Dimmung dar, da wie oben ausgeführt das Dimmen auch durch Änderung der hochfrequenten Taktung des Schalters S2 selbst erfolgen kann.

Indessen kann das Dimmen der LED, d.h. die Einstellung des LED-Stroms auf einen definierten einwählbaren Wert, auch abhängig von anderen Größen erfolgen. Beispielsweise kann das Dimmen abhängig von einem erfassten Batterieentladestrom (siehe Schaltung von Figur 5) erfolgen, um somit die Batterielebenszeit zu verlängern.

Die Treiberschaltung 5 kann die LED auch dimmen, wenn der Mittelwert der Netzspannung, die die Ladeschaltung 3 versorgt, unter einen vorgegebenen Wert absinkt. Als weitere assistierende Maßnahme zur Verlängerung der Batterielebensdauer kann der Flyback-Konverter in der Ladeschaltung 3 in einen gepulsten Betrieb versetzt werden, so dass also der Flyback-Konverter assistierend zu der schwächer werdenden Batteriespannung die Treiberschaltung 5 versorgt.

Um eine Entladung der Batteriespannung zur Batterie 4 zu erfassen, kann die Batteriespannung erfasst werden (siehe wiederum Figur 5).

Weiterhin kann zusätzlich zu der LED-Stromerfassung eine LED-Spannungserfassung erfolgen.

Eine Softstart-Funktion kann vorgesehen sein, bei der die Steuerschaltung 2 bei Inbetriebnahme zuerst einen verhältnismäßig geringen Teststrom durch die LED(s) fliessen lässt. Die Testmessung soll elektrische Parameter ermitteln, um herauszufinden, ob eine bzw. welche LED an die Treiberschaltung 5 angeschlossen ist. Beispielsweise kann ermittelt werden, welche LED-Spannung sich bei dem vorgegebenen Teststrom ergibt. Daraus können Rückschlüsse auf die Art (Farbe) und Anzahl der angeschlossenen LEDs getroffen werden, um wiederum abhängig davon den stationären Betriebsstrom angepasst an die ermittelten LED-Type zu regeln.

Grundsätzlich kann vorgesehen sein, dass die Steuereinheit 2 bei Inbetriebnahme den LED-Strom durch entsprechende Ansteuerung des Schalters S2 der Treiberschaltung 5 ausgehend von einem niedrigen Wert hin zu dem stationären Betriebswert für den LED-Strom erhöht.

Wenn das Anlegen des Teststroms das Fehlen oder einen Störfall einer LED ergibt, können automatisch in vorgegebenen Abständen eine Wiederholung des Anlegens der Testspannung erfolgen, bis das Einsetzen einer ordnungsgemäßen LED erfasst wird.

Wie gesagt kann der Strom durch die LED entweder durch Überlagerung einer niederfrequenten Modulation zu der hochfrequenten Taktung des Schalters S2 und/oder durch eine Veränderung (Tastverhältnis, Frequenz) der hochfrequenten Taktung selbst erfolgen.

**Patentansprüche**

1. Schaltung zum Betreiben wenigstens einer LED, wobei die Schaltung aufweist:

   • eine Energiespeichereinheit (4),
   • eine mit einer Netzversorgungsspannung ($U_{in}$) zu versorgende Ladeschaltung (3) zum Laden der Energiespeichereinheit (4) während eines Ladebetriebs, wobei die Ladeschaltung (3) eine Potentialtrennung aufweist,
   wobei die Schaltung ferner eine Steuereinheit (2) aufweist, welche dazu ausgebildet ist, den Zustand der Netzversorgungsspannung ($U_{in}$) während des Ladebetriebs zu überwachen,
   **dadurch gekennzeichnet,**
   **dass** die Steuereinheit (2) den Zustand der Netzversorgungsspannung ($U_{in}$) anhand von auf der Ausgangsseite der Ladeschaltung (3) gemessenen Betriebsgrößen der Schaltung ermittelt, wobei die Ladeschaltung (3) durch einen Flyback-Konverter gebildet ist und die Steuereinheit (2) den Zustand der Netzversorgungsspannung ($U_{in}$) unter Berücksichtigung eines Duty-Cycles (D1) zur Ansteuerung eines Schalters (S1) des Flyback-Konverters (3) sowie einer gemessenen Sekundärspannung ($U_{flb2}$) des Flyback-Konverters ermittelt.

2. Schaltung nach Anspruch 1,
   **dadurch gekennzeichnet,**
   **dass** die Ansteuerung des Schalters (S1) über einen Optokoppler (6) erfolgt.

3. Schaltung nach Anspruch 1 oder 2,
   **dadurch gekennzeichnet,**
   **dass** die Ladeschaltung (3) einen Transformator (T) aufweist.

4. Schaltung nach einem der Ansprüche 1 bis 3,

   **dadurch gekennzeichnet,**
   **dass** die Steuereinheit (2) ferner den Zustand der Netzversorgungsspannung ($U_{in}$) unter Berücksichtigung des Duty-Cycles (D1) zur Ansteuerung des Schalters (S1) sowie der Ladeleistung ($P_{flb2}$) für die Energiespeichereinheit (4) ermittelt.

5. Schaltung nach Anspruch 4,
   **dadurch gekennzeichnet,**
   **dass** die Steuereinheit (2) die Ladeleistung ($P_{flb2}$) für die Energiespeichereinheit (4) durch Messung des durch die Energiespeichereinheit (4) fließenden Stroms ($I_{bat}$) sowie der daran anliegenden Spannung ($U_{bat}$) bestimmt.

6. Schaltung nach einem der Ansprüche 1 bis 5,
   **dadurch gekennzeichnet,**
   **dass** die Steuereinheit (2) die Netzversorgungsspannung ($U_{in}$) durch Vergleich bekannter bzw. gemessener Betriebsgrößen mit einer in der Steuereinheit (2) hinterlegten Wertetabelle bestimmt.

7. Schaltung nach einem der vorherigen Ansprüche,
   **dadurch gekennzeichnet,**
   **dass** die Schaltung eine Treiberschaltung (5) aufweist, die als Schaltregler ausgebildet ist und die einen durch die Steuereinheit (2) angesteuerten steuerbaren Schalter (S2) aufweist.

8. Schaltung nach Anspruch 7,
   **dadurch gekennzeichnet,**
   **dass** die Steuereinheit (2) die Treiberschaltung (5) ansteuert und die wenigstens eine LED unabhängig vom Ladezustand der Energiespeichereinheit (4) mit einer konstanten Leistung ($P_{led}$) oder konstantem Strom ($I_{led}$) betrieben wird.

9. Notlichtgerät,
   aufweisend eine Schaltung nach einem der vorhergehenden Ansprüche.

10. Notlichtgerät nach Anspruch 9, aufweisend eine während eines Notlichtbetriebs durch die Energiespeichereinheit (4) versorgte Treiberschaltung (5) zum Betreiben wenigstens einer LED, wobei die Steuereinheit (2) dazu ausgebildet ist, einen Notzustand bei Abweichungen der Netzversorgungsspannung ($U_{in}$) von vorbestimmten Soll-Werten zu erkennen, und bei Erkennen des Notzustands den Notlichtbetrieb zu aktivieren.

**Claims**

1. Circuit for operating at least one LED, wherein the circuit has:

   • an energy storage unit (4),

• a charging circuit (3) to be supplied with a mains supply voltage ($U_{in}$) for charging the energy storage unit (4) during a charging operation, wherein the charging circuit (3) has an electrical isolation, wherein the circuit furthermore has a control unit (2) configured to monitor the state of the mains supply voltage ($U_{in}$) during the charging operation, **characterized in that** the control unit (2) determines the state of the mains supply voltage ($U_{in}$) by means of operating parameters of the circuit measured on the output side of the charging circuit (3), wherein the charging circuit (3) is formed by a flyback converter and the control unit (2) determines the state of the mains supply voltage ($U_{in}$) by taking into consideration a duty cycle (D1) for actuating a switch (S1) of the flyback converter (3) as well as a measured secondary voltage ($Uf_{lb2}$) of the flyback converter.

2. Circuit according to claim 1, **characterized in that** the actuation of the switch (S1) takes place via an optocoupler (6).

3. Circuit according to claim 1 or 2, **characterized in that** the charging circuit (3) has a transformer (T).

4. Circuit according to one of claims 1 to 3, **characterized in that** the control unit (2) further determines the state of the mains supply voltage ($U_{in}$) by taking into consideration the duty cycle (D1) for actuating the switch (S1) as well as the charging capacity ($P_{f1b2}$) for the energy storage unit (4).

5. Circuit according to claim 4, **characterized in that** the control unit (2) determines the charging capacity ($P_{f1b2}$) for the energy storage unit (4) by measuring the current ($I_{bat}$) flowing through the energy storage unit (4) as well as the voltage ($U_{bat}$) applied thereon.

6. Circuit according to one of claims 1 to 5, **characterized in that** the control unit (2) determines the mains supply voltage ($U_{in}$) by comparing known/measured operating parameters with a value table provided in the control unit (2).

7. Circuit according to one of the preceding claims, **characterized in that** the circuit has a driver circuit (5) that is configured as switching regulator and has a controllable switch (S2) actuated by the control unit (2).

8. Circuit according to claim 7, **characterized in that** the control unit (2) actuates the driver circuit (5) and the at least one LED is operated with a constant output ($P_{led}$) or constant current ($I_{led}$) independent of the charging state of the energy storage unit (4).

9. Emergency light device, having a circuit according to one of the preceding claims.

10. Emergency light device according to claim 9, having a driver circuit (5), supplied during an emergency light operation by the energy storage unit (4), for operating at least one LED, wherein the control unit (2) is configured to recognize an emergency state when the mains supply voltage ($U_{in}$) deviates from predetermined target values and to activate the emergency light when recognizing said emergency state.

**Revendications**

1. Circuit servant à faire fonctionner au moins une DEL, dans lequel le circuit comporte :

   • une unité de stockage d'énergie (4),
   • un circuit de charge (3) à alimenter par une tension d'alimentation de secteur ($U_{in}$) servant à charger l'unité de stockage d'énergie (4) lors d'une opération de charge, dans lequel le circuit de charge (3) possède une isolation, dans lequel le circuit possède de plus une unité de commande (2) configurée pour surveiller l'état de la tension d'alimentation du secteur ($U_{in}$) lors de l'opération de charge, **caractérisé en ce que** l'unité de commande (2) détermine l'état de la tension d'alimentation du secteur ($U_{in}$) par le biais de paramètres de fonctionnement du circuit mesurés sur la sortie du circuit de charge (3), dans lequel le circuit de charge (3) est formé par un convertisseur Buck et l'unité de commande (2) détermine l'état de la tension d'alimentation du secteur ($U_{in}$) en prenant en considération un cycle de travail (D1) pour activer un interrupteur (S1) du convertisseur Buck (3) ainsi qu'une tension secondaire mesurée ($U_{f1b2}$) du convertisseur Buck.

2. Circuit selon la revendication 1, **caractérisé en ce que** l'activation de l'interrupteur (S1) a lieu par l'intermédiaire d'un photocoupleur (6).

3. Circuit selon les revendications 1 ou 2, **caractérisé en ce que** le circuit de charge (3) possède un transformateur (T).

4. Circuit selon l'une des revendications de 1 à 3, **caractérisé en ce que** l'unité de commande (2) détermine de plus l'état de la tension d'alimentation du secteur ($U_{in}$) en prenant en considération le cycle de travail (D1) pour activer l'interrupteur (S1) ainsi que la capacité de charge ($P_{f1b2}$) pour l'unité de stockage d'énergie (4).

5. Circuit selon la revendication 4, **caractérisé en ce que** l'unité de commande (2) détermine la capacité de charge ($P_{f1b2}$) pour l'unité de stockage d'énergie (4) en mesurant le courant ($I_{bat}$) circulant à travers l'unité de stockage d'énergie (4) ainsi que la tension ($U_{bat}$) qui lui est appliquée.

6. Circuit selon l'une des revendications de 1 à 5, **caractérisé en ce que** l'unité de commande (2) détermine la tension d'alimentation du secteur ($U_{in}$) en comparant des paramètres de fonctionnement connus/mesurés avec un tableau de valeurs prévu dans l'unité de commande (2).

7. Circuit selon l'une des revendications précédentes, **caractérisé en ce que** le circuit possède un circuit d'attaque (5) étant configuré comme un régulateur à découpage et possède un interrupteur pouvant être commandé (S2) activé par l'unité de commande (2).

8. Circuit selon la revendication 7, **caractérisé en ce que** l'unité de commande (2) active le circuit d'attaque (5) et l'au moins une DEL est utilisée avec une puissance constante ($P_{led}$) ou un courant constant ($I_{led}$) indépendant de l'état de charge de l'unité de stockage d'énergie (4).

9. Dispositif d'éclairage de sécurité ayant un circuit selon l'une des revendications précédentes.

10. Dispositif d'éclairage de sécurité selon la revendication 9, ayant un circuit d'attaque (5) alimenté lors d'une opération d'éclairage d'urgence par l'unité de stockage d'énergie (4), servant à faire fonctionner au moins une DEL, dans lequel l'unité de commande (2) est configurée pour reconnaître un état d'urgence lorsque la tension d'alimentation du secteur ($U_{in}$) s'écarte de valeurs cibles prédéfinies et pour activer l'éclairage de sécurité lors de la reconnaissance dudit état d'urgence.

Fig. 1

Fig. 2

Fig. 3

Fig. 4

Fig. 5

EP 2 717 425 B1

Fig. 6

Fig. 7

**IN DER BESCHREIBUNG AUFGEFÜHRTE DOKUMENTE**

**In der Beschreibung aufgeführte Patentdokumente**

- EP 1507327 A
- US 6858994 B2
- US 6502044 B1
- JP 2000235055 A

**In der Beschreibung aufgeführte Nicht-Patentliteratur**

- Evaluation of a low cost permanent emergency lighting system based on high efficiency LEDs. **VON RICO-SECADES M. et al.** Conference record of the 2003 IEEE Industry Applications Conference, 38TH. IAS Annual meeting. Salt Lake City, UT. IEEE, 12. Oktober 2003, vol. 1, 542-546